# EUROPEAN PATENT SPECIFICATION

(11) **EP 1 568 001 B1**
(45) Date of publication and mention of the grant of the patent: **25.03.2009**
(21) Application number: 03812403.8
(22) Date of filing: 28.11.2003
(51) Int. Cl.: G08G 1/16, B60K 31/00, B60T 7/12

(54) **ARRANGEMENT AND METHOD FOR BRAKING A VEHICLE**
ANORDNUNG UND VERFAHREN ZUM BREMSEN EINES FAHRZEUGS
SYSTEME ET PROCEDE DE FREINAGE POUR VEHICULES

(30) Priority: 29.11.2002 SE 0203537
(43) Date of publication of application: 31.08.2005
(73) Proprietor: Scania CV AB (publ), 151 87 Södertälje (SE)
(72) Inventor: VÄGSTEDT, Nils-Gunnar, S-187 74 Täby (SE); BLACKENFELT, Michael, S-169 72 Solna (SE); DAHLBERG, Erik, SE-178 34 Ekerö (SE); JOHANSSON, Jonny, S-146 31 Tullinge (SE)
(86) International application number: PCT/SE2003/001844
(87) International publication number: WO 2004/051597

(56) References cited:
- DE-A1- 10 011 263
- US-A- 5 574 644
- US-B1- 6 265 990

## Description

### BACKGROUND TO THE INVENTION, AND STATE OF THE ART

The invention relates to an arrangement and a method for braking a vehicle according to the preambles of claims 1 and 11.

Such arrangements for braking a vehicle are known to be used in so-called adaptive cruise controllers (ACC). Adaptive cruise controllers comprise, for example, a radar system which detects the distance and the relative velocity to a vehicle ahead. The adaptive cruise controller provides automatic maintenance of the vehicle's speed even in the midst of other traffic. When using such a cruise controller, a driver initially sets a desired velocity and a desired time interval to a vehicle ahead. When there is no vehicle near ahead, the adaptive cruise controller acts like a traditional cruise controller and the vehicle travels at the set velocity. If on the other hand there is a vehicle near ahead, the velocity of the vehicle fitted with ACC is adapted to the velocity of the vehicle ahead so as to maintain the desired time interval between the vehicles. Should the time interval to the vehicle ahead decrease to less than the set time interval, the brakes of the vehicle are activated. On heavy vehicles what is first activated for such braking is a auxiliary brake which may be a retarder, an engine brake or an exhaust brake. In extreme situations when very powerful braking is required to prevent a collision, the ordinary wheel brakes are also used. The object of an adaptive cruise controller is to make driving work less tiring and more relaxed for the driver while at the same time reducing the reaction time for braking the vehicle when an obstacle suddenly appears ahead of the vehicle.

According to one standard, however, retardation of the vehicle is limited to at most 3 m/s² when its braking is entirely automatically controlled. Certain situations nevertheless require greater retardation of the vehicle if a collision is to be prevented. In such situations the driver has to take over the braking of the vehicle. This involves the driver depressing the brake pedal, whereupon the adaptive cruise controller is disconnected and manual braking of the vehicle is effected via the brake pedal. Such a situation is disclosed in US6265990, where a control system for maintaining a predetermined distance to a vehicle in front is described. The control system controls the engine of the vehicle and at least one braking means to accelerate or brake the vehicle in order to maintain the predetermined distance. A warning signal is activated when the distance to a vehicle in front is shorter than the predetermined distance at the same time as the maximum available braking capacity already is utilized. When the driver is alarmed by the warning signal, the driver has the possibility to press down the braking pedal in order to brake the vehicle in a conventional way.

However, an inexperienced driver may have difficulty in determining when to take over the braking and in deciding how powerfully the vehicle needs braking if a collision is to be prevented.

### SUMMARY OF THE INVENTION

The object of the present invention is to provide an arrangement and a method which in a simple manner enable a driver, when there is insufficient automatic braking of a vehicle, to quickly and easily initiate judicious braking of the vehicle so as to prevent a collision with an object ahead.

The object stated above is achieved with the arrangement mentioned in the introduction which is characterised by what is indicated in the characterising part of claim 1. The detection system thus detects the distance to the vehicle ahead but also, with advantage, the relative velocity of the object ahead. The detection system sends to a control unit signals concerning the distance and the relative velocity. The control unit uses said parameter values to calculate or otherwise estimate the time interval to the object ahead, which is usually a vehicle. The time interval may be calculated as the measured distance to the vehicle ahead, divided by the velocity of the vehicle fitted with ACC. The control unit advantageously also calculates the time interval derivative which determines approximately how quickly the time interval to the vehicle ahead increases or decreases. On the basis of these values and the velocity of the vehicle fitted with ACC, the control unit estimates a necessary retardation value for maintaining the desired time interval. The maximum permissible retardation value for automatic braking of a vehicle is set at a limit value. When the estimated retardation value falls below this limit value, the control unit automatically initiates braking of the vehicle by the estimated retardation.value. Should the first estimated retardation value for maintaining the desired time interval exceed the limit value, the control unit calculates a second retardation value for preventing a collision with the vehicle in front. If this second retardation value does not exceed the limit value, the control unit initiates automatic braking of the vehicle by this retardation value. Should the control unit estimate that a greater retardation value than the limit value is required for preventing a collision, said indicating means is activated. Said indicating means thereupon indicates to the driver the need to provide greater retardation of the vehicle than the limit value if a collision is to be prevented within a certain predetermined time. Through said indication, the driver becomes aware of the acute situation and then has the possibility of using said control to manually initiate retardation of the vehicle by the estimated second retardation value. Retardation of the vehicle beyond the limit value is thus allowed without disconnecting the adaptive cruise controller. By activating such a control it is easy for the driver to initiate rapid and judicious braking of the vehicle so that a collision with an object ahead is prevented without the adaptive cruise controller being disconnected.

According to one embodiment of the present invention, said control has a button means which is manoeuvrable by the driver by a hand movement The button means may be situated on the vehicle's instrument panel so that it can easily be reached by the driver. The button means may comprise a switch which, when the button means is pressed in or is touched with a finger, provides the control unit with a control signal for initiating that the driver desires retardation of the vehicle by a value which exceeds said limit value. Alternatively or in addition, said control may be a pedal which is manoeuvrable by the driver by a foot movement. In that case the control maybe an existing brake pedal, which means that the driver can by a slight activation movement of the brake pedal confirm that retardation beyond the limit value is desired. A driver applies the brake pedal as a matter of reflex in an emergency situation and can thereby quickly confirm that retardation beyond the limit value is desired.

According to another embodiment of the present invention, said indicating means comprises a sound-generating means. In this case the sound-generating means generates a suitable warning signal when the automatically controlled braking is not sufficient for preventing a collision. The acoustic signal draws the driver's attention to the prevailing situation, enabling him/her to quickly decide whether it is a crisis situation. If it is a crisis situation, the driver has the possibility of using the control to indicate braking of the vehicle by the second retardation value so that a collision is prevented. In this case the braking initiated by the control unit may be given a suitably selected brake characteristic, i.e. the brake characteristic need not coincide with that provided for corresponding pedal braking by a corresponding retardation value. Alternatively, said indicating means may comprise a light-generating means. In that case the light-generating means may generate a flashing light to attract the driver's attention. With advantage, both a light signal and an acoustic signal are generated to ensure that the driver's attention is drawn to the acute situation. If a button means is used, it may emit a flashing light signal so that its position is quickly identified by the driver.

According to another embodiment of the present invention, the arrangement comprises a sensor adapted to detect the position of a brake pedal in the vehicle, and the control unit is adapted to disconnect the automatic braking of the vehicle when a retardation value which is greater than the necessary retardation value is indicated by the position of the brake pedal by the control unit. In this case it is preferable to use an already existing sensor to detect the position of the brake pedal. If the driver him/herself wishes to execute braking of the vehicle, the brake pedal can be depressed in a conventional manner. In this situation, if the position of the brake pedal indicates a greater retardation of the vehicle than the estimated retardation value, the manual braking takes over the braking. This manual takeover of the braking is possible both during automatically initiated braking with retardation of the vehicle below said limit value and during more acute braking when the driver uses the control to initiate a desired retardation of the vehicle beyond said limit value.

According to another embodiment of the present invention, the arrangement comprises an adaptive cruise control system adapted to endeavour to maintain the speed of the vehicle at a velocity desired by the driver. Such a cruise control system which comprises the arrangement described above provides automatic maintenance of the vehicle's speed even in the midst of other traffic. This means that the vehicle can travel without the driver having to use the accelerator pedal and the brake pedal. With advantage, the cruise control system is adapted to endeavour to maintain a desired time interval to an object ahead. This entails the cruise controller system adapting the velocity of the vehicle relative to the velocity of the vehicle ahead so that the desired time interval is maintained. The time interval may be a predetermined value or be settable by the driver, but it needs to be so great that the vehicle can without problems be braked automatically by the control unit without risk of collision with a vehicle ahead. In other words, in normal circumstances there is no need to resort to retardation beyond a limit value in order to maintain said time interval.

According to another embodiment of the present invention, the vehicle comprises wheel brakes and at least one auxiliary brake, and the control unit is adapted to initiate said automatically controlled braking of the vehicle by activating in the first place the auxiliary brake. Heavy vehicles usually comprise at least one auxiliary brake. In such cases the auxiliary brake is used first, to avoid wear on the ordinary wheel brakes. The auxiliary brake may be a retarder, an exhaust brake or a compression brake. The detection system is preferably a radar system. With a suitable radar system, both the distance to an object ahead and the relative velocity between the vehicle and said object can be detected with great accuracy. The control unit can use information about said distance and velocity to calculate the time interval between the vehicles and check that it is being maintained. The necessary braking movement for the vehicle to obtain the calculated retardation value is also estimated using information on parameters such as the load of the vehicle and the friction of the running surface.

### BRIEF DESCRIPTION OF THE DRAWINGS

An embodiment of the invention is described below by way of example with reference to the attached drawings, in which:
- Fig. 1: depicts schematically a vehicle with an adaptive cruise control system which comprises an arrangement according to the present invention,
- Fig. 2: depicts schematically the driver's cab of the vehicle in Fig. 1, and
- Fig. 3: depicts a flowchart which describes a method of the present invention.

### DETAILED DESCRIPTION OF AN EMBODIMENT OF THE INVENTION

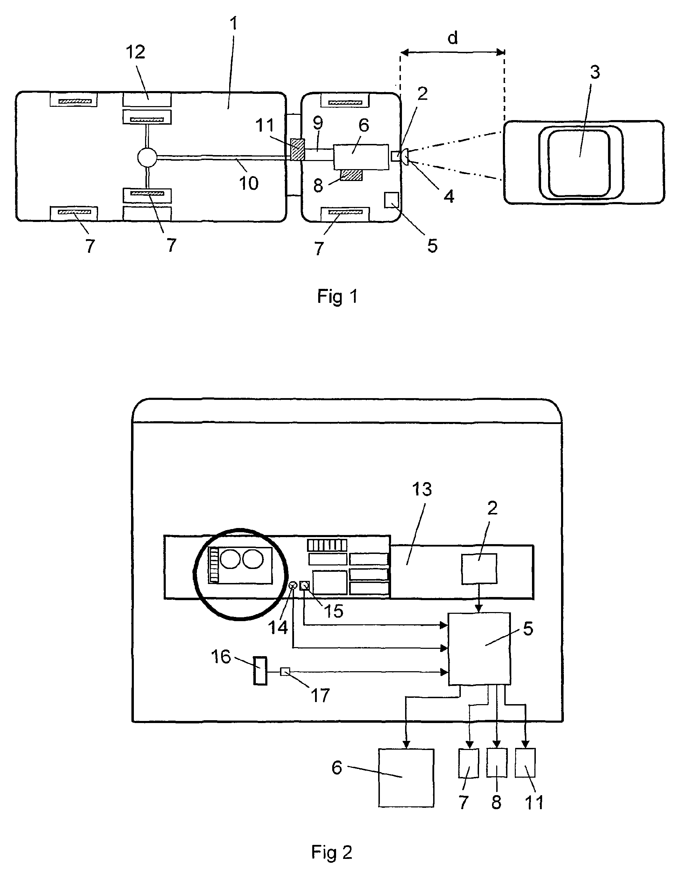

Fig. 1 depicts a heavy motor vehicle 1 with an adaptive cruise control system. The adaptive cruise control system comprises in this case a radar system 2 for detecting an object ahead. Such a detection system may also be an optical system, a laser system or a system which uses the infrared light. The radar system 2 comprises an antenna 4 arranged on a front surface of the vehicle 1. The radar system 2 emits via the antenna 4 radio signals in the main direction of travel of the vehicle 1, with a certain angular spread. When the radar waves strike an object ahead, which in the case depicted is a vehicle 3, a radar echo is reflected from the vehicle 3. The radar echo is picked up by the antenna 4 and can be used by the radar system 2 to determine parameters such as the distance d to the vehicle ahead 3, the relative velocity Δv between the vehicles 1, 3 and the position of the vehicle ahead 3. A control unit 5 is connected to the radar system 2 and receives at very short intervals of time signals concerning the parameter values detected.

The vehicle 1 thus comprises an adaptive cruise control system which endeavours to provide automatically a substantially constant speed maintenance of the vehicle 1. When activating the cruise control system, the driver inputs a desired velocity v_{ref}, a distance d and/or a desired time interval Δt_{ref} to the vehicle ahead 3. When there is no vehicle not far ahead 3, the adaptive cruise controller acts like a traditional cruise controller. In such circumstances, the control unit 5 initiates operation of a combustion engine 6 so that the vehicle travels substantially continuously at the input velocity v_{ref}. If on the other hand there is a vehicle not far ahead 3, the velocity of the vehicle 1 is adapted to the velocity of the vehicle ahead 3 so that the desired time interval Δt_{ref} between the vehicles is maintained. The time interval between the vehicles may be defined as the time it takes the vehicle fitted with ACC travelling at the current velocity to reach the position of the vehicle ahead. The control unit 5 uses information about the velocity of the vehicle fitted with ACC and information from the radar system 2 concerning the distance d to and the relative velocity Δv of the vehicle ahead 3 to calculate substantially continuously the time interval Δt to the vehicle ahead 3 and the time interval derivative dΔt/dt, i.e. whether the time interval Δt is tending to increase or decrease and by what value. Should the control unit 5 determine that there is risk of the time interval Δt becoming shorter than the desired time interval Δt_{ref}, the control unit 5 estimates the retardation value required by the vehicle 1 if the desired time interval Δt_{ref} is to be maintained. Reducing the velocity v₁ of the vehicle 1 is effected by activation of the vehicle's existing brakes.

A heavy vehicle 1 usually has a multiplicity of brakes. The vehicle 1 comprises a multiplicity of wheel brakes 7 which may in a conventional manner comprise wheel cylinders with friction linings adapted to be applied to brake discs in order to effect braking of the vehicle. The vehicle 1 also comprises a first auxiliary brake in the form of an exhaust brake 8 arranged in conjunction with the vehicle's combustion engine 6. An alternative auxiliary brake to an exhaust brake 6 is a compression brake (not depicted in Fig. 1). The vehicle 1 has a driveline extending from the combustion engine 6 to the vehicle's powered wheels 12. The driveline comprises inter alia a gearbox 9 and a drive shaft 10. In this case a second auxiliary brake in the form of a retarder 11 is connected to the drive shaft 10 to enable braking of the drive shaft 10 and hence of the vehicle's powered wheels 12. To avoid wear on the wheel brakes 7, the control unit 5 initiates activation first of the retarder 11 and the exhaust brake 8 in order to maintain the desired time interval Δt_{ref} to the vehicle ahead 3. Should the braking capacity of the auxiliary brakes 8, 11 be insufficient to maintain the desired time interval Δt_{ref}, the wheel brakes 7 are also activated.

According to one standard, however, the permissible vehicle retardation is limited to at most 3 m/s² during automatically initiated braking of a vehicle 1. Should the control unit 5 calculate a necessary retardation value which exceeds this limit value r_{g}, the control unit 5 thus cannot automatically initiate braking of the vehicle by the calculated retardation value. Fig. 2 depicts schematically the driver's cab in the vehicle 1. The driver's cab comprises an instrument panel 13 which comprises an indicating means in the form of a noise-generating means 14 and a control in the form of a button means 15. When the vehicle 1 is in motion, the radar system 2 detects substantially continuously the distance d and the relative velocity Δv to a vehicle ahead 3. The radar system 2 sends to the control unit 5 signals concerning the parameter values detected. The control unit 5 calculates the current time interval At to the vehicle ahead 3 and the time interval derivative dΔt/dt. The control unit 5 checks thereafter whether the desired time interval to the vehicle ahead 3 is being maintained.

Should the time interval Δt to the vehicle ahead 3 tend to increase beyond the desired time interval Δt_{ref}, the control unit 5 activates the combustion engine 6 and allows a speed increase if the velocity of the vehicle 1 is lower than the input velocity v_{ref}. If instead there is risk of the time interval Δt becoming shorter than the desired time interval Δt_{ref}, the control unit 5 calculates a necessary first retardation value r₁ of the vehicle for maintaining the desired time interval Δt_{ref}. If the retardation value r₁ thus calculated is lower than the permissible limit value r_{g}, the control unit 5 automatically initiates activation first of the retarder 11 and the exhaust brake 8 in order to maintain the desired time interval Δt_{ref}. If the calculated first retardation value r₁ is greater than the permissible limit value r_{g}, a calculation of a necessary second retardation value r₂ for preventing a collision with the vehicle ahead 3 is also performed. If this second retardation value r₂ is lower than the limit value r_{g}, the control unit 5 initiates automatic braking of the vehicle by this second retardation value r₂.

Finally, if the calculated retardation value r₂ for preventing a collision with the vehicle ahead 3 exceeds the limit value r_{g}, the control unit 5 initiates braking of the vehicle at 3 m/s². At the same time, the control unit 5 initiates activation of the sound-generating means 14 which generates an alarm signal. The driver's attention is thus drawn to the acute situation. If the driver then decides that there is risk of collision, he/she can quickly press in the button means 15. The button means 15 comprises a circuit-breaker which in a pressed-in position sends to the control unit 5 a signal which confirms that the driver desires braking of the vehicle by the second retardation value r₂ estimated by the control unit 5, in order to prevent a collision. As the second retardation value r₂, which thus exceeds the limit value r_{g}, has been initiated by the driver, there is no longer any barrier to the control unit 5 initiating braking of the vehicle by this retardation value, r₂. Alternatively or in conjunction with the driver pressing in the button means 15, the driver may depress a brake pedal 16 to ensure that sufficient braking of the vehicle is applied. A sensor 17 detects the position of the brake pedal and sends to the control unit 5 a signal concerning said position. If the driver initiates by the brake pedal position r_{bp} a greater retardation value of the vehicle than the calculated second retardation value r₂, the control unit 5 is adapted to allow braking by the retardation value r_{bp} which is initiated by the brake pedal 16.

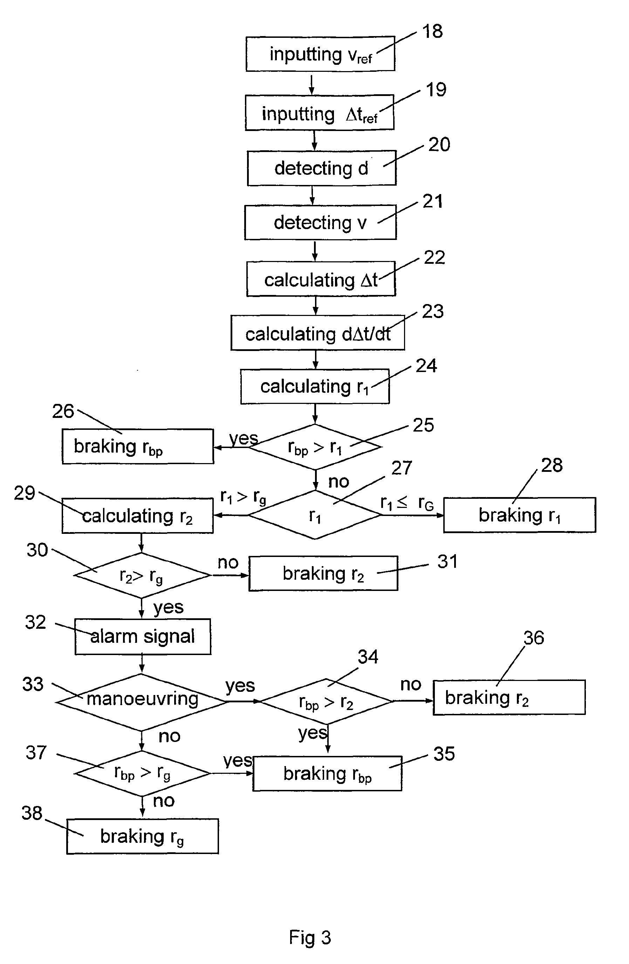

Fig. 3 depicts a flowchart of a method for braking a vehicle with an adaptive cruise controller according to Figures 1 and 2. The method comprises initially, at 18, the input of a reference velocity v_{ref} concerning the desired velocity of the vehicle 1. At 19, there is input of a time interval Δt_{ref} which it is desired to maintain relative to a vehicle ahead 3. During operation of the vehicle 1, the radar system 2 detects, at 20, the distance d to a vehicle ahead 3. At 21, the radar system 2 detects also the relative velocity Δv between the vehicles 1, 3. The parameters d, Δv detected by the radar system 2 are sent as signal values to the control unit 5. At 22, from knowledge of the distance d to the vehicle ahead and the velocity v of the vehicle fitted with ACC, the control unit 5 calculates, for example, the time interval Δt between the vehicles 1, 3 as d/v. At 23, the control unit calculates the time interval derivative dΔt /dt. The time interval derivative dΔt /dt may be calculated on the basis of at least two consecutively calculated relative time intervals Δt at different points in time. The time interval derivative dΔt /dt indicates whether the time interval Δt is tending to increase or decrease and how quickly this is happening. At 24, the control unit 5 uses information about the time interval Δt between the vehicles 1, 3, the time interval derivative dΔt /dt and the velocity v of the vehicle 1 to calculate a necessary first retardation value r₁ for maintaining the desired time interval Δt_{ref}.

At 25, the control unit 5 receives information from the sensor 17 concerning the position of the brake pedal 16. The control unit 5 compares whether the driver by using the brake pedal 16 initiates a greater retardation value r_{bp} than the calculated first retardation value r₁. If the driver initiates a greater retardation value r_{bp} than the calculated first retardation value r₁, the brake pedal 16 takes over the braking process and the vehicle is braked by the retardation value r_{bp} initiated by the brake pedal 16, which takes place at 26. If both r₁ and r_{bp} are nil, no braking of the vehicle takes place. If r₁ is greater than r_{bp}, the control unit determines, at 27, whether r₁ is also greater than a limit value r_{g} which indicates a maximum permissible retardation of the vehicle 1 by automatically initiated braking. If r₁ is not greater than r_{g}, the control unit 5 initiates , at 28, automatic braking of the vehicle by the calculated first retardation value r₁.

If, however, the calculated first retardation value r₁ is greater than the limit value r_{g}, the control unit 5 cannot automatically initiate braking of the vehicle by the calculated retardation value r₁. The first retardation value r₁ has been calculated to maintain the desired time interval Δt_{ref} to the vehicle ahead 3. It is desirable, but not necessary, to maintain this. At 29, the control unit 5 therefore calculates a necessary second retardation value r₂ for preventing a collision with the vehicle ahead 3. At 30, a comparison is done to see whether the retardation value r₂ exceeds the limit value r_{g}. If such is not the case, the control unit 5 initiates, at 31, automatic braking of the vehicle by the retardation value r₂.

If on the other hand the second retardation value r₂ exceeds the limit value r_{g}, it may be found that a collision with the vehicle ahead 3 cannot be prevented by automatic braking of the vehicle 1. At 32, the control unit 5 activates the sound-generating means 14, which emits an alarm signal. The button means 15 preferably comprises an indicating lamp which simultaneously begins to flash. The driver will then become aware of the acute situation. At 33, the driver may choose to press in the button means 15. In conjunction with such manoeuvring of the button means 15, the control unit 5 is sent a control signal which initiates that the driver desires braking of the vehicle by the calculated second retardation value r₂ in order to prevent a collision with the vehicle ahead 3. In this situation, as the driver initiates braking of the vehicle by the second retardation value r₂, the braking is in no way limited to the limit value r_{g} indicated above. The driver nevertheless always has the possibility of taking over the braking of the vehicle via the brake pedal 16. At 34, the control unit 5 therefore compares whether the position of the brake pedal 16 initiates a greater retardation value r_{bp} than the calculated second retardation value r₂. If the position of the brake pedal 16 initiates a greater retardation value r_{bp} than the calculated second retardation value r₂, braking is effected, at 35, by a retardation value r_{bp} according to the position of the brake pedal 16. If on the other hand the position of the brake pedal 16 initiates a greater retardation value r_{bp} than the calculated retardation value r₂, braking is effected, at 3 6, by the retardation value r₂. When a time has inevitably elapsed between the alarm and the pressing in of the button means 15, the control unit 5 calculates substantially continuously, at least after the button means 15 has been pressed in, a current second retardation value r₂ for successively adapting the braking of the vehicle to prevailing circumstances. If the driver chooses not to manoeuvre the button means 15 but effects braking of the vehicle manually via the brake pedal 16, a check is done at 37 as to whether the retardation value r_{bp} of the brake pedal 16 is greater than the limit value r_{g}. If the position of the brake pedal 16 indicates a greater retardation value r_{bp} than the limit value r_{g}, braking by the retardation value r_{bp} takes place at 35. In the opposite case, the control unit 5 activates the predetermined maximum retardation by the limit value r_{g} of the vehicle, which takes place at 38.

The invention is in no way limited to the embodiment described but may be varied freely within the scopes of the claims. The limit value r_{g} is at present set at 3 m/s² but substantially any value is possible. Also, for maintaining a desired distance d or time interval Δt_{ref} to an object ahead, the driver may use the control 15, 16 to initiate braking of the vehicle 1 by a necessary retardation value r₁ which is greater than said limit value r_{g}.

## Claims

1. An arrangement for braking a vehicle (1), whereby the arrangement comprises a detection system (2) adapted to detect at least the distance (d) to an object ahead (3) in the direction of travel of the vehicle, and a control unit (5) adapted to at least estimate a necessary retardation value (r₁, r₂) for the vehicle (1), and whereby the control unit (5) is adapted to automatically initiate braking of the vehicle (1) by the necessary retardation value (r₁, r₂) up to a retardation limit value (r_{g}), **characterised in that** the arrangement comprises indicating means (14) adapted to indicate to a driver when a greater retardation value (r₁, r₂) than said limit value (r_{g}) is required, and at least one control (15,16) which, in conjunction with such an indication, is manoeuvrable by the driver to initiate automatic braking of the vehicle (1) by said greater retardation value (r₁, r₂) than said limit value (r_{g}) estimated by the control unit (5).

2. An arrangement according to claim 1, **characterised in that** said control is a button means (15) which is manoeuvrable by the driver by a hand movement

3. An arrangement according to claim 1 or 2, **characterised in that** said control comprises a pedal (16) which is manoeuvrable by the driver by a foot movement.

4. An arrangement according to any one of the foregoing claims, **characterised in that** said indicating means comprises a sound-generating means (14).

5. An arrangement according to any one of the foregoing claims, **characterised in that** said indicating means comprises a light-generating means (15).

6. An arrangement according to any one of the foregoing claims, **characterised in that** the arrangement comprises a sensor (17) adapted to detect a position of a brake pedal (16) in the vehicle, and that the control unit (5) is adapted to initiate braking of the vehicle (1) by the retardation value (r_{bp}) which is indicated by the position of the brake pedal (16) if it is greater than the estimated necessary retardation value (r₁, r₂).

7. An arrangement according to any one of the foregoing claims, **characterised in that** the arrangement is comprised in an adaptive cruise control system adapted to endeavour to maintain the speed of the vehicle at a vehicle velocity (v_{ref}) desired by the driver.

8. An arrangement according to claim 7, **characterised in that** the cruise control system is adapted to endeavour to maintain a desired time interval (Δt_{ref}) to an object ahead (3).

9. An arrangement according to any one of the foregoing claims, **characterised in that** the vehicle (1) comprises wheel brakes (7) and at least one auxiliary brake (8, 11) and that the control unit (5) is adapted to initiate said braking of the vehicle by activation of, in the first place, the auxiliary brake (8,11).

10. An arrangement according to any one of the foregoing claims, **characterised in that** the detection system is a radar system (2).

11. A method for braking a vehicle (1), which method comprises the steps of detecting at least the distance (d) to an object ahead (3) in the direction of travel of the vehicle, of estimating at least a necessary retardation value (r₁, r₂) for the vehicle (1), and of initiating automatic braking of the vehicle (1) by the necessary retardation value (r₁, r₂) up to a retardation limit value (r_{g}), **characterised by** the steps of indicating to a driver when a greater retardation value (r₁, r₂) than said limit value (r_{g}) is required and of the driver being allowed, upon such indication, to manoeuvre at least one control (15, 16) in order to initiate automatic braking of the vehicle by the estimated greater retardation value (r₁, r₂).

12. A method according to claim 11, **characterised by** the step of the driver manoeuvring said control (15) by a hand movement.

13. A method according to claim 11 or 12, **characterised by** the step of the driver manoeuvring said control (16) by a foot movement.

14. A method according to any one of claims 11-13 above, **characterised by** the step of indicating to a driver by an acoustic signal when a greater retardation value (r₂) than said limit value (r_{g}) is required if a collision with the object ahead (3) is to be prevented.

15. A method according to any one of claims 11-13 above, **characterised by** the step of indicating to a driver by a light signal when a greater retardation value (r₂) than said limit value (r_{g}) is required if a collision with the object ahead (3) is to be prevented.

16. A method according to any one of claims 11-15 above, **characterised by** the step of detecting the position of a brake pedal (16) in the vehicle and initiating braking of the vehicle (1) by the retardation value (r_{bp}) which is indicated by the position of the brake pedal (16) if it is greater than the estimated necessary retardation value (r₁, r₂).

17. A method according to any one of claims 11-16 above, **characterised by** the step of endeavouring to maintain constant speed of the vehicle (1) at a desired vehicle velocity (v_{ref}).

18. A method according to claim 17, **characterised by** the step of endeavouring to maintain a desired time interval (Δt_{ref}) to an object ahead (3).

19. A method according to any one of claims 11-18 above, whereby the vehicle (1) comprises wheel brakes (7) and at least one auxiliary brake (8-11), **characterised by** the step of initiating said automatically controlled braking of the vehicle by activation of, in the first place, the auxiliary brake (8-11).

20. A method according to any one of claims 11-19 above, **characterised by** the step of detecting by means of a radar system (2) the distance (d) to the object ahead in the direction of travel of the vehicle.

## Patentansprüche

1. Anordnung zum Bremsen eines Fahrzeugs (1), wobei die Anordnung ein Erfassungssystem (2), das zum Erfassen wenigstens eines Abstands (d) zu einem sich in Fahrtrichtung des Fahrzeugs vor dem Fahrzeug befindenden Objekt (3) geeignet ist, und eine Steuereinheit (5) aufweist, die zumindest zum Abschätzen eines erforderlichen Verzögerungswerts (r₁, r₂) für das Fahrzeug (1) geeignet ist, und wobei die Steuereinheit (5) zum automatischen Einleiten einer Bremsung des Fahrzeugs mit dem erforderlichen Verzögerungswert (r₁, r₂) bis zu einem Verzögerungsgrenzwert (rg) angepasst ist,
**dadurch gekennzeichnet, dass** die Anordnung ein Anzeigemittel (14), das einem Fahrer anzeigt, falls ein größerer Verzögerungswert (r₁, r₂) als der Grenzwert (rg) erforderlich ist, und wenigstens eine Steuerung (15, 16) aufweist, die in Verbindung mit einer derartigen Anzeige durch den Fahrer betätigbar ist, um eine automatische Bremsung des Fahrzeugs (1) mit dem größeren Verzögerungswert (r₁, r₂) als den von der Steuereinheit (5) geschätzten Grenzwert (rg) einzuleiten.

2. Anordnung nach Anspruch 1,
**dadurch gekennzeichnet, dass** die Steuerung ein Tastmittel (15) ist, das durch eine Handbewegung des Fahrers betätigbar ist.

3. Anordnung nach Anspruch 1 oder 2,
**dadurch gekennzeichnet, dass** die Steuerung ein Pedal (16) aufweist, das durch eine Fußbewegung des Fahrers betätigbar ist.

4. Anordnung nach einem der vorangehenden Ansprüche,
**dadurch gekennzeichnet, dass** das Anzeigemittel ein Geräuscherzeugungsmittel (14) aufweist.

5. Anordnung nach einem der vorangehenden Ansprüche,
**dadurch gekennzeichnet, dass** das Anzeigemittel ein Lichterzeugungsmittel (15) aufweist.

6. Anordnung nach einem der vorangehenden Ansprüche,
**dadurch gekennzeichnet, dass** die Anordnung einen Sensor (17) aufweist, der zum Erfassen einer Position eines Bremspedals (16) in dem Fahrzeug angepasst ist, und dass die Steuereinheit (5) zum Einleiten einer Bremsung des Fahrzeugs (1) mit dem durch die Position des Bremspedals (16) angezeigten Verzögerungswert (r_{bp}) angepasst ist, falls dieser größer als der geschätzte erforderliche Verzögerungswert (r₁, r₂) ist.

7. Anordnung nach einem der vorangehenden Ansprüche,
**dadurch gekennzeichnet, dass** die Anordnung in einem adaptiven Geschwindigkeitsregelsystem beinhaltet ist, das angepasst ist, um die Fahrzeuggeschwindigkeit auf einer von dem Fahrer gewünschten Fahrzeuggeschwindigkeit (v_{ref}) zu halten.

8. Anordnung nach Anspruch 7,
**dadurch gekennzeichnet, dass** das Geschwindigkeitsregelsystem angepasst ist, um ein gewünschtes Zeitintervall (Δt_{ref}) zu einem sich vor dem Fahrzeug (1) befindenden Objekt (3) zu erhalten.

9. Anordnung nach einem der vorangehenden Ansprüche,
**dadurch gekennzeichnet, dass** das Fahrzeug (1) Radbremsen (7) und wenigstens eine Zusatzbremse (8, 11) aufweist, und dass die Steuereinheit (5) angepasst ist, um die Bremsung des Fahrzeugs zuerst durch Aktivieren der Zusatzbremse (8, 11) einzuleiten.

10. Anordnung nach einem der vorangehenden Ansprüche, **dadurch gekennzeichnet, dass** das Erfassungssystem ein Radarsystem (2) ist.

11. Verfahren zum Bremsen eines Fahrzeugs (1), wobei das Verfahren die Schritte umfasst:
Erfassen wenigstens eines Abstands (d) zu einem sich in Fahrtrichtung des Fahrzeugs vor dem Fahrzeug befindenden Objekt (3),
Schätzen wenigstens eines benötigten Verzögerungswertes (r₁, r₂) des Fahrzeugs (1) und
Einleiten einer automatischen Bremsung des Fahrzeugs (1) mit dem benötigten Verzögerungswert (r₁, r₂) bis zu einem Verzögerungsgrenzwert (rg),
**gekennzeichnet durch** die Schritte:
Anzeigen gegenüber einem Fahrer, falls ein größerer Verzögerungswert (r₁, r₂) benötigt wird als der Grenzwert (r_{g}) und als vom Fahrer erlaubt, und Zulassen einer Betätigung wenigstens einer Steuerung (15, 16) nach einer derartigen Anzeige, um eine automatische Bremsung des Fahrzeugs mit dem geschätzten größeren Verzögerungswert (r₁, r₂) einzuleiten.

12. Verfahren nach Anspruch 11,
**gekennzeichnet durch** den Schritt, dass die Steuerung (15) **durch** eine Handbewegung des Fahrers betätigt wird.

13. Verfahren nach einem der Ansprüche 11 oder 12,
**gekennzeichnet durch** den Schritt, dass die Steuerung (16) **durch** eine Fußbewegung des Fahrers betätigt wird.

14. Verfahren nach einem der vorangehenden Ansprüche 11 bis 13, **gekennzeichnet durch** den Schritt, dass einem Fahrer **durch** ein akustisches Signal angezeigt wird, falls ein größerer Verzögerungswert (r₂) als der Grenzwert (r_{g}) erforderlich ist, um eine Kollision mit dem sich vor dem Fahrzeug befindenden Objekt (3) zu verhindern.

15. Verfahren nach einem der vorangehenden Ansprüche 11 bis 13, **gekennzeichnet durch** den Schritt, dass einem Fahrer **durch** ein Lichtsignal angezeigt wird, falls ein größerer Verzögerungswert (r₂) als der Grenzwert (rg) erforderlich ist, um eine Kollision mit dem sich vor dem Fahrzeug befindenden Objekt (3) zu verhindern.

16. Verfahren nach einem der vorangehenden Ansprüche 11 bis 15, **gekennzeichnet durch** den Schritt, dass die Position eines Bremspedals (16) in dem Fahrzeug ermittelt und eine Bremsung des Fahrzeugs (1) mit dem **durch** die Position des Bremspedals (16) angezeigten Verzögerungswert (r_{bp}) eingeleitet wird, falls dieser größer ist als der geschätzte benötigte Verzögerungswert (r₁, r₂).

17. Verfahren nach einem der vorangehenden Ansprüche 11 bis 16, **gekennzeichnet durch** den Schritt, dass die konstante Geschwindigkeit des Fahrzeugs (1) auf einer gewünschten Fahrzeuggeschwindigkeit (v_{ref}) gehalten wird.

18. Verfahren nach Anspruch 17, **gekennzeichnet durch** den Schritt, dass ein Soll-Zeitintervall (Δt_{ref}) zu einem sich vor dem Fahrzeug befindenden Objekt (3) eingehalten wird.

19. Verfahren nach einem der vorangehenden Ansprüche 11 bis 18, wobei das Fahrzeug eine Radbremse (7) und wenigstens eine Zusatzbremse (8-11) aufweist, **gekennzeichnet durch** den Schritt, dass eine automatisch kontrollierte Bremsung des Fahrzeugs zuerst **durch** Aktivieren der Zusatzbremse (8-11) eingeleitet wird.

20. Verfahren nach einem der vorangehenden Ansprüche 11 bis 19, **gekennzeichnet durch** den Schritt, dass der Abstand (d) zu einem sich in Fahrtrichtung des Fahrzeugs vor dem Fahrzeug befindenden Objekt mittels eines Radarsystems (2) erfasst wird.

## Revendications

1. Dispositif de freinage pour un véhicule (1), le dispositif comprenant un système de détection (2) conçu pour détecter au moins la distance (d) par rapport à un objet situé devant (3) dans la direction de déplacement du véhicule, et une unité de commande (5) conçue pour au moins estimer une valeur de décélération nécessaire (r₁, r₂) pour le véhicule (1), et l'unité de commande (5) étant conçue pour déclencher automatiquement le freinage du véhicule (1) à la valeur de décélération nécessaire (r₁, r₂) jusqu'à l'obtention d'une valeur de décélération limite (rg), **caractérisé en ce que** le dispositif comprend un dispositif indicateur (14) conçu pour indiquer à un conducteur quand une valeur de décélération (r₁, r₂) supérieure à ladite valeur limite (rg) est nécessaire, et au moins un dispositif de commande (15, 16) qui, en conjonction avec ladite indication, peut être manoeuvré par le conducteur pour déclencher le freinage automatique du véhicule (1) à ladite valeur de décélération (r₁, r₂) supérieure à ladite valeur limite (rg) estimée par l'unité de commande (5).

2. Dispositif selon la revendication 1, **caractérisé en ce que** ledit dispositif de commande est un bouton (15) qui peut être manoeuvré par le conducteur par un mouvement de la main.

3. Dispositif selon la revendication 1 ou 2, **caractérisé en ce que** ledit dispositif de commande comprend une pédale (16) qui peut être manoeuvrée par le conducteur par un mouvement du pied.

4. Dispositif selon l'une quelconque des revendications précédentes, **caractérisé en ce que** ledit dispositif indicateur comprend un dispositif produisant un signal sonore (14).

5. Dispositif selon l'une quelconque des revendications précédentes, **caractérisé en ce que** ledit dispositif indicateur comprend un dispositif produisant un signal lumineux (15).

6. Dispositif selon l'une quelconque des revendications précédentes, **caractérisé en ce qu'**il comprend un détecteur (17) conçu pour détecter une position d'une pédale de frein (16) dans le véhicule, et **en ce que** l'unité de commande (5) est conçue pour déclencher le freinage du véhicule (1) à la valeur de décélération (r_{bp}) qui est indiquée par la position de la pédale de frein (16) si elle est supérieure à la valeur de décélération nécessaire estimée (r₁, r₂).

7. Dispositif selon l'une quelconque des revendications précédentes, **caractérisé en ce qu'**il fait partie d'un système de régulation de conduite adaptatif conçu pour veiller au maintien de la vitesse du véhicule à une vélocité du véhicule (v_{ref}) souhaitée par le conducteur.

8. Dispositif selon la revendication 7, **caractérisé en ce que** le système de régulation de conduite adaptatif est conçu pour veiller au maintien d'un intervalle de temps souhaité (Δt_{ref}) par rapport à un objet situé devant (3).

9. Dispositif selon l'une quelconque des revendications précédentes, **caractérisé en ce** le véhicule (1) comprend des freins de roue (7) et au moins un frein auxiliaire (8, 11), et en ce que l'unité de commande (5) est conçue pour déclencher ledit freinage du véhicule par l'activation, en premier lieu, du frein auxiliaire (8, 11).

10. Dispositif selon l'une quelconque des revendications précédentes, **caractérisé en ce que** le système de détection est un système de radar (2).

11. Procédé de freinage d'un véhicule (1), le procédé comprenant les étapes consistant à détecter au moins la distance (d) par rapport à un objet situé devant (3) dans la direction de déplacement du véhicule, à estimer au moins une valeur de décélération nécessaire (r₁, r₂) pour le véhicule (1) et à déclencher automatiquement le freinage du véhicule (1) à la valeur de décélération nécessaire (r₁, r₂) jusqu'à l'obtention d'une valeur de décélération limite (rg), **caractérisé par** les étapes consistant à indiquer à un conducteur quand une valeur de décélération (r₁, r₂) supérieure à ladite valeur limite (rg) est nécessaire, le conducteur étant en mesure, avec ladite indication, de manoeuvrer au moins un dispositif de commande (15, 16) pour déclencher le freinage automatique du véhicule à la valeur de décélération (r₁, r₂) supérieure estimée.

12. Procédé selon la revendication 11, **caractérisé par** l'étape dans laquelle le conducteur manoeuvre ledit dispositif de commande (15) par un mouvement de la main.

13. Procédé selon la revendication 11 ou 12, **caractérisé par** l'étape dans laquelle le conducteur manoeuvre ledit dispositif de commande (16) par un mouvement du pied.

14. Procédé selon l'une quelconque des revendications 11 à 13 précédentes, **caractérisé par** l'étape consistant à indiquer à un conducteur par un signal acoustique quand une valeur de décélération (r₂) supérieure à ladite valeur limite (r_{g}) est nécessaire pour éviter une collision avec l'objet situé devant (3).

15. Procédé selon l'une quelconque des revendications 11 à 13 précédentes, **caractérisé par** l'étape consistant à indiquer à un conducteur par un signal lumineux quand une valeur de décélération (r₂) supérieure à ladite valeur limite (rg) est nécessaire pour éviter une collision avec l'objet situé devant (3).

16. Procédé selon l'une quelconque des revendications 11 à 15 précédentes, **caractérisé par** l'étape consistant à détecter une position d'une pédale de frein (16) dans le véhicule et à déclencher le freinage du véhicule (1) à la valeur de décélération (r_{bp}) qui est indiquée par la position de la pédale de frein (16) si elle est supérieure à la valeur de décélération nécessaire estimée (r₁, r₂).

17. Procédé selon l'une quelconque des revendications 11 à 16 précédentes, **caractérisé par** l'étape consistant à veiller au maintien d'une vitesse constante du véhicule (1) à une vélocité du véhicule (v_{ref}) souhaitée.

18. Procédé selon la revendication 17, **caractérisé par** l'étape consistant à veiller au maintien d'un intervalle de temps souhaité (Δt_{ref}) par rapport à un objet situé devant (3).

19. Procédé selon l'une quelconque des revendications 11 à 18 précédentes, dans lequel le véhicule (1) comprend des freins de roue (7) et au moins un frein auxiliaire (8, 11), **caractérisé par** l'étape consistant à déclencher ledit freinage du véhicule commandé automatiquement par l'activation, en premier lieu, du frein auxiliaire (8, 11).

20. Procédé selon l'une quelconque des revendications 11 à 19 précédentes, **caractérisé par** l'étape consistant à détecter à l'aide d'un système radar (2) la distance (d) par rapport à l'objet situé devant dans la direction de déplacement du véhicule.
